# EUROPEAN PATENT APPLICATION

(11) **EP 3 407 475 A1**
(43) Date of publication of application: **28.11.2018**
(21) Application number: 18172699.3
(22) Date of filing: 16.05.2018
(51) Int. Cl.: H02K 49/10, B65G 39/08, B65G 54/02, H02K 41/03, H02K 7/06

(54) **MAGNETIC TRANSPORT SYSTEM**

(30) Priority: 22.05.2017 BE 201705371
(71) Applicant: Madect BVBA, 2310 Rijkevorsel (BE)
(72) Inventor: Hendrickx, Maarten, 2310 Rijkevorsel (BE)
(74) Representative: Philippaerts, Yannick

(57) **Abstract**

Transport system comprising a rail and a carriage, wherein the carriage comprises a lower segment on which is placed a series of magnets which are positioned and oriented in accordance with a predetermined pattern, and wherein the carriage can be driven in a longitudinal direction of the rail by moving a complementary further series of magnets, which can be at least partially magnetically coupled to the series of magnets of the carriage, in the rail, and wherein the rail is constructed with a plurality of drive wheels lying mutually in line, wherein the drive wheels are each provided at the position of their periphery with the further series of magnets.

## Description

The present invention relates to a transport system with a rail and a carriage, wherein the carriage comprises the lower segment on which is placed a series of magnets which are positioned and oriented in accordance with a predetermined pattern, and wherein the carriage can be driven in a longitudinal direction of the rail.

Magnetic transport systems were developed to enable carriages to be moved over the rail individually and independently of each other. This is advantageous in many types of application, for instance in packaging machines. Particularly in applications in which objects are transported over a plurality of processing stations it is advantageous to place the objects on carriages and to be able to move the carriages individually and separately of each other.

A transport system with a rail and carriages, wherein the carriages are provided with magnets, is described in EP 3048711. This document describes a system wherein the carriages comprise magnets and wherein the rail takes the form of a stator in order to control an electromagnetic field over the rail. By controlling the electromagnetic field over the rail the magnets of the carriages will be attracted so that the carriages can move over the rail. In such systems a controller is typically provided to move the carriages individually over the rail.

A drawback of such systems is that the stator for moving the carriages individually over the rail is expensive. Because this stator is an essential component of such a magnetic transport system, the whole transport system is expensive. Controlling of the stator in order to move the carriages over the rail is also technically complex.

It is an object to provide a transport system in which a carriage can be moved flexibly over a rail and wherein the transport system can be manufactured more cheaply.

The invention provides for this purpose a transport system comprising a rail and a carriage, wherein the carriage comprises a lower segment on which is placed a series of magnets which are positioned and oriented in accordance with a predetermined pattern, and wherein the carriage can be driven in a longitudinal direction of the rail by moving a complementary further series of magnets, which can be at least partially magnetically coupled to the series of magnets of the carriage, in the rail, and wherein the rail is constructed with a plurality of drive wheels lying mutually in line, wherein the drive wheels are each provided at the position of their periphery with the further series of magnets.

According to the invention, the rail comprises a plurality of wheels and a further series of magnets is arranged on a periphery of the wheels. By rotating the wheels, the further series of magnets will also rotate in the rail. This further series of magnets is complementary to the series of magnets provided in a lower segment of the carriage. The magnets on the drive wheels can further be coupled at least partially to the magnets of the carriage. The carriage will thereby be attracted via its magnets by the magnets of the drive wheels. Rotation of these wheels will thus cause a movement of the carriage over the rail. Wheels can be driven in very simple manner. Techniques for driving wheels have long been known and are therefore reliable and inexpensive. The controllers and mechanisms for accurately controlling the drive of the wheels are widely available. This allows the rail to be constructed in inexpensive manner, with inexpensive components. This also allows the rail to be inexpensively actuated and controlled so that the carriages can move over the rail.

The drive wheels are preferably positioned rotatably in the rail and the drive wheels are preferably configured to be driven in order to move the complementary series of magnets in the rail, wherein a part, situated in an upper circle segment of the drive wheels, of the further series of magnets can be magnetically coupled to the series of magnets of the carriages. The drive wheels are situated at fixed positions in the rail and are each rotatable in their position. The magnets are provided at the position of the periphery of the drive wheels, typically over the whole periphery of the drive wheels. Only the magnets located at the top of the drive wheels will be magnetically coupled to the magnets of the carriages. By rotating the drive wheels, the magnets situated at the top of the drive wheels perform at least partially a horizontal movement. The magnets of the carriages will follow this horizontal movement of the magnets, so that the carriages are moved. The skilled person will appreciate that all this can be configured such that the carriages can be advanced by successive drive wheels. Considering the magnets at the position of the upper segment of the plurality of drive wheels, these magnets will typically show a wave pattern during rotation of the plurality of drive wheels. Because of this wave motion, the magnets of the carriages can be transferred from the one wave peak, at a first drive wheel, to a second wave peak, at a second drive wheel. A carriage can thus be moved over the rail and over the different drive wheels. It will be apparent here that each drive wheel could be driven at a unique speed and/or acceleration, such that the carriages are individually drivable.

The series of magnets of the carriages preferably comprises at least three magnets placed on a line at substantially regular intermediate distances and such that the distance between the centre of gravity of the first and of the final magnet on the line is greater than the average radius of the drive wheels. In order to allow a carriage to move optimally from a first drive wheel to a second drive wheel, tests have shown that the carriages preferably comprise at least three magnets and that these magnets are placed over a sufficiently great distance at regular intermediate distances. A sufficiently great distance is defined here as distance between the centre of gravity of the first and of the final magnet on the line being greater than the average radius of the drive wheels. The drive wheels have corresponding magnets on their periphery. By making the distance between the first and the final magnet of the carriage sufficiently great, the carriage can easily move from one drive wheel to a subsequent drive wheel. The final magnet of the carriage will here still be sufficiently affected by the magnets of the periphery of a first drive wheel, while the first magnet of the carriage is already sufficiently affected by the magnets at the position of the periphery of the second drive wheel.

The at least three magnets preferably comprise at least four magnets, more preferably at least five magnets. Tests have shown that it is advantageous to provide the carriage with at least four and preferably at least five magnets placed on a line. It will be apparent that many more magnets can be provided. A test setup has thus been designed in which 21 magnets are situated aligned on the carriage. This allows the use of larger drive wheels.

The series of magnets on the line are preferably alternately oriented north and south. This alternate north and south orientation and the corresponding alternate north and south orientation of the complementary further series of magnets on the drive wheels provides for a relative fixing or looking of the position of the series of magnets to the position of the complementary further series of magnets. Movement of the complementary further series of magnets will hereby directly cause a movement of the series of magnets of the carriage. By alternately orienting the series of magnets north and south, magnets lying opposite each other between carriage and rail will attract each other, while magnets lying crosswise relative to each other between carriage and rail will repel each other. This increases the strength of the magnetic coupling, particularly in the direction of movement of the carriages.

The plurality of drive wheels are preferably configured to be driven individually. Each drive wheel can be provided with its own drive motor. This allows each drive wheel to be controlled in an individual manner. The carriages can hereby be controlled individually.

The transport system preferably comprises a plurality of carriages, each having the lower segment on which said series of magnets is placed, and wherein the transport system comprises a controller for moving each of the carriages by controlling the plurality of drive wheels. Multiple carriages can be moved over the rail individually.

The controller is preferably configured to drive the plurality of carriages at different speeds. The rail more preferably takes the form of a closed circuit so that the carriage can be driven endlessly over the circuit in a direction. Because of the individual controllability of the carriages, and because of the rail taking the form of a closed circuit, a flexible transport system can be manufactured for integration into a machine.

The lower segment preferably comprises two legs extending downward relative to a running surface in order to engage over lateral edges of the rail. By providing the carriage with two legs which engage over the edges of the rail the carriage is held fast on the rail and the carriage is unable to slide laterally off the rail.

The series of magnets is preferably provided in duplicate and placed in each of the two legs at a distance from the running surface, wherein the magnets are directed toward an upright wall of the rail. The drive wheels are here further preferably provided on either side, at the position of their periphery, with the further series of magnets, which are placed in lateral planes of the drive wheels. In such a construction the magnets can be coupled in a balanced manner. This means that the magnets exert substantially equal force on the left and on the right. This construction further allow the component of vertical movement of the magnets on the drive wheels relative to the carriages to be halved. The effect of this vertical directional component can be minimized by placing the magnets of the carriages at a distance from the running surface which is related to an average height of the magnets in the upper segment of the drive wheels.

The carriage preferably has an upper segment which is connected to the lower segment and which is configured to hold an object so that the object is movable over the rail. The upper segment can take a replaceable form so that different objects can be transported by the carriages. This allows a machine to be built in which objects of different sizes, shapes and dimensions can be moved over the rail.

The rail and the carriage are preferably provided with complementary guide elements so that the carriage is held fast on the rail by guide elements during a movement in the longitudinal direction of the rail. Such guide elements can comprise slide bearings, can comprise roller bearings, or a combination thereof. The rail and the carriage can also take complementary forms so as to hold the carriage on the rail.

The invention will now be further described on the basis of an exemplary embodiment shown in the drawing.

In the drawing:
figure 1 shows a perspective view of an embodiment of the invention; and
figure 2 shows a schematic drawing in side view of the invention.

The same or similar elements are designated in the drawing with the same reference numerals.

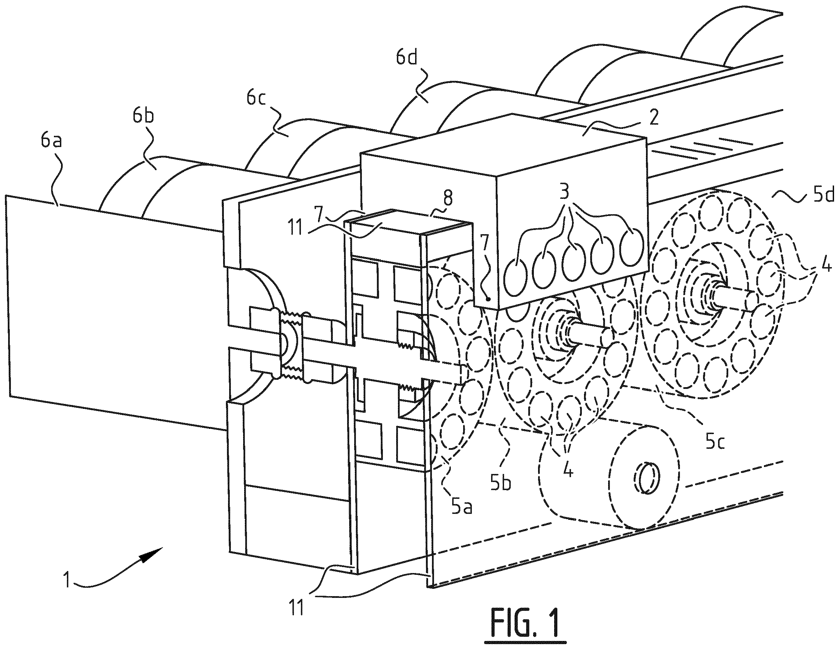

Figure 1 shows a perspective view of a segment of a transport system according to the invention. The operating principles of the transport system according to the invention can be inferred from figure 1. The skilled person will therefore be able on the basis of this figure and the accompanying description to construct a transport system according to the invention, wherein the rail can take the form of a closed circuit. It will be apparent here that the rail can have different lengths and can be constructed to cover different paths. A path can here have straight sections, have bends, move upward or downward, and so on. This allows the transport system to be embodied in accordance with the application for which the transport system will be used.

The transport system comprises on the one hand a rail 1 and comprises on the other hand one and preferably more carriages 2. Rail 1 and carriages 2 have compatible forms, as discussed below. This compatibility preferably has several aspects. The rails and the carriages are thus mechanically compatible in order to facilitate movement of carriages 2 over rail 1 in a transport direction while undesired movements, for instance a movement transversely of the transport direction, are at least partially prevented. Rail 1 and carriages 2 are further magnetically compatible, such that a movement of carriages 2 over rail 1 can be achieved by attraction and/or repulsion of magnets.

Carriage 2 is provided at the position of a lower segment with a series of magnets 3. The lower segment of carriage 2 is defined here as the segment comprising at least the surfaces and/or parts which lie and/or support against rail 1 when carriage 2 is placed on rail 1. Providing the series of magnets 3 on the lower segment of carriage 2 enables the magnets of the series 3 to be brought physically into proximity with magnets in rail 1, so that the magnets of the series of magnets 3 can be attracted and/or repelled by a complementary further series of magnets 4 in rail 1, as will be further elucidated hereinbelow.

In the embodiment of figure 1 the lower segment of carriage 2 has two legs 7. During operation, the two legs 7 each extend over an edge of rail 1 so that carriage 2 can be placed with its legs 7 transversely over rail 1. The inner side of legs 7 is configured to lean and/or lie, optionally with a predetermined clearance, against opposite upright surfaces of rail 1. Placing carriage 2 transversely over the rail prevents carriage 2 from being able to slide off the rail in the transverse direction of the rail. This increases the reliability of the transport system. The series of magnets 3 is preferably provided on an inner side of each of the two legs 7. In the series of magnets 3, adjacent magnets preferably have opposing orientations. As an example, the series of five magnets 3 of figure 1 will hereby have the following orientations on the inner side of the legs: north-south-north-south-north. Carriage 2, and preferably the lower segment thereof, is preferably constructed symmetrically relative to an upright plane extending in the transport direction. Although the symmetrical construction does relate here to the position of the elements of the carriage and the magnets, it does not necessarily relate to the orientation of the magnets. The series of magnets 3 are preferably placed on a line extending in the transport direction.

As alternative to the embodiment as shown in figure 1, a series of magnets 3 can be provided centrally under the carriage in the transport direction. The complementary series of further magnets 4 will then also be placed centrally in rail 1 so as to be complementary. The skilled person will appreciate that different relative arrangements are possible in order to realize attraction and/or repulsion between magnets on carriage 2 on the one hand and magnets in rail 1 on the other.

Rail 1 is provided with a plurality of drive wheels 5. Figure 1 shows four drive wheels, designated with reference numerals 5a, 5b, 5c, and 5d. Drive wheels 5 lie substantially mutually in line, with a small clearance between adjacent wheels 5. A small clearance is here preferably defined as a clearance between peripheral surfaces of adjacent wheels of a maximum of 10 mm, preferably a maximum of 5 mm, more preferably a maximum of 3 mm. Alternatively, the maximal clearance between adjacent wheels 5 is determined in relation to the radius 10 of the wheels, wherein the maximal clearance is defined as a maximum of 10% of the radius 10 of wheels 5, preferably a maximum of 5% of the radius 10 of wheels 5, more preferably a maximum of 3% of the radius 10 of wheels 5. The skilled person will appreciate that the clearance can also be greater when the carriages have a greater length and a longer series of magnets.

In the embodiment of figure 1 the wheels are mounted rotatably in a frame 11. Frame 11 has here two upright walls, between which the wheels can rotate. Frame 11 further has an upper wall for covering wheels 5 at the top. The upper wall and/or the upright walls of frame 11 can be provided with guide elements 8 which are compatible with guide elements on carriage 2, such that carriage 2 can move optimally over rail 1. Guide elements 8 are typically provided to reduce the resistance between carriage 2 and rail 1 in the transport direction and/or to minimize the clearance between carriage 2 and rail 1 during movement in the transport direction. Reducing the resistance will enable the carriage to be moved easily over the rail with minimal energy. Minimizing the clearance of carriage 2 relative to rail 1 will make it possible to precisely determine the position of carriage 2 on rail 1 and to minimize vibrations and/or undesired additional movements during the forward movement of carriage 2 over rail 1. In the embodiment of figure 1 the guide elements 8 take the form of sliding surfaces. A plastic sliding surface can for instance be provided over a width and with a length corresponding to dimensions of an underside of carriage 2, such that the resistance and the clearance between carriage 2 and rail 1 will be improved. The skilled person will appreciate that, depending on the application, wheels and associated running surfaces can also be provided as guide element, which wheels with running surfaces are on the one hand more complex than sliding surfaces, but a lower resistance and improved clearance can on the other hand be achieved.

Each of the drive wheels 5 is provided at the position of its periphery with a complementary further series of magnets 4. This further series of magnets 4 is complementary to the series of magnets 3 of the carriages. The complementarity between magnets 3 and 4 has several aspects. A first aspect relates to the position of the magnets in the rail, which is such that magnets 3 and magnets 4 are directed toward each other and can come close enough together to achieve attraction and/or repulsion. It will be apparent from figure 1 that not all magnets 3 will simultaneously lie sufficiently close to all magnets 4 to achieve attraction and/or repulsion. This is because the magnets situated at the bottom of the drive wheels in the situation of figure 1 are not positioned close to magnets 3 of the carriage. The skilled person will however appreciate that, dynamically, it will be possible by rotation of wheel 5 to bring all magnets of the complementary series 4, provided on drive wheel 5, into a position in which they are directed toward and lie in the vicinity of magnets 3 on a carriage 2. The complementarity further relates to the orientation of the magnets in the series. In the embodiment of figure 1 adjacent magnets in the complementary further series 4 therefore have opposing orientations. The skilled person will appreciate that a complementary orientation need not always be an alternating orientation, but that a complementary pattern can be chosen, which pattern will be applied in carriages 2 and in rail 1.

The complementary further series of magnets 4 is placed in a periphery of drive wheels 5. In the embodiment of figure 1 two complementary further series of magnets 4 are provided in the periphery, wherein the magnets are directed transversely of wheel 5, each toward a different transverse side. The further series of magnets 4 is hereby complementary to the series of magnets 3, which is also provided in duplicate in the two legs 7 of carriages 2. In an alternative embodiment the further series of magnets 4 can be placed centrally and in the running surface of wheels 5c, wherein the magnets are radially directed so as to be complementary to a series of magnets placed in the central plane on an underside of the carriages. The skilled person will appreciate that different mutual and relative positions and orientations can be selected in order to achieve a dynamic attraction and/or repulsion between the series of magnets 3 on carriages 2 and the further series of magnets 4 on drive wheels 5.

Each of the drive wheels 5 is provided with a drive 6. In the embodiment of figure 1 each drive wheel 5 has its own drive 6 in the form of a motor. Electric motors are known, which are reliable and inexpensive, and techniques for controlling these motors are known and accurate. Alternatively, use can be made of pneumatic or hydraulic motors or combustion engines.

It will be apparent to the skilled person that the embodiment of figure 1 is a preferred embodiment and that other preferred embodiments can be provided wherein two or more drive wheels 5, preferably adjacent drive wheels 5, are driven by one drive 6. On the one hand, this reduces the flexibility of the drive of carriages 2, but at the same time it reduces the cost of rail 1. Depending on the application and situation, a skilled person can opt for a high degree of flexibility, wherein substantially each drive wheel 5 has its own drive 6, or an optimal cost, wherein drive wheels 5 are combined, driven by one drive 6. In this context it is noted that combinations can also be provided wherein segments of the transport system have a flexible construction, with a drive 6 for each drive wheel, while other segments of the transport system are constructed more cost-efficiently.

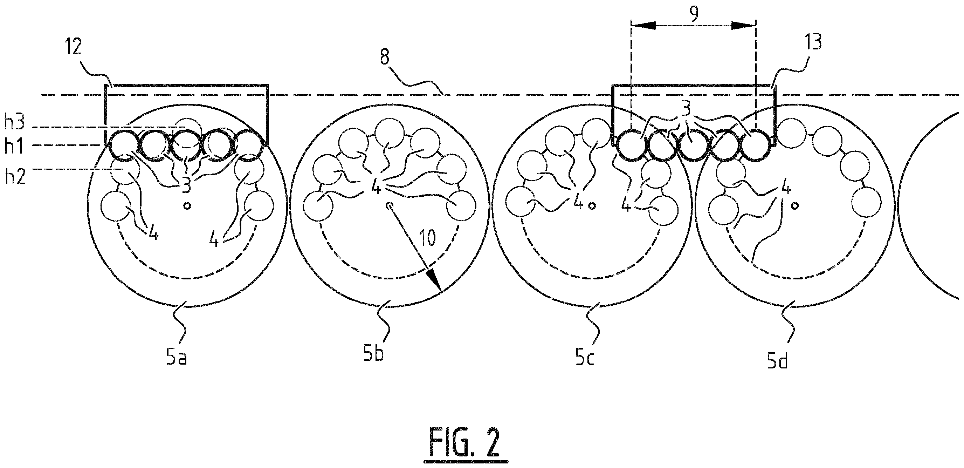

The operation of the transport system of figure 1 is further elucidated with reference to figure 2. Figure 2 shows a cross-sectional side view of the transport system. A plurality of drive wheels 5a, 5b, 5c and 5d are shown here. Each of these wheels is provided with the further series of magnets 4. Figure 2 shows a first carriage 12 which is in a state to be driven by one drive wheel, this being drive wheel 5a. The figure further shows a second carriage 13 which is in a further state, wherein the driving is transferred from one drive wheel to another drive wheel, in the figure wheels 5c and 5d. In other words, first carriage 12 is situated above a drive wheel 5a, while second carriage 13 is situated above two or between two wheels 5c and 5d. The whole operation of the transport system can be elucidated on the basis of these two states. This is because, as a carriage advances over the rail, the carriage will alternately be in the first state and in the further state, which in each case involves subsequent drive wheels.

The advantage of placing the magnets in the lateral planes of drive wheels 5 can be shown with reference to figure 2. The drive wheels perform a rotating movement so that the complementary further series of magnets 4 is also rotated round the respective shafts of the drive wheels. Only the upper segment of the complementary further series of magnets 4 will be magnetically coupled to the series of magnets 3 of carriage 2 during operation. At the position of this upper segment of drive wheels 5 the complementary further series of magnets 4 performs during rotation of the drive wheels a movement which has not only a horizontal component in the direction of movement of carriage 2 but which also has a vertical component. In the first carriage 12 in figure 2 the five magnets 3 of carriage 2 are coupled to five successive magnets 4 of drive wheel 5a. The magnets 3 of carriage 12 are placed at a height HI in rail 1. As a result of the round shape of drive wheel 5, the magnets of the further series 4 which are coupled to the series of magnets 3 are not situated at a constant height in the rail, and are situated between a height H2 and a height H3 as illustrated in figure 2.

In the design of the transport system the carriage is preferably formed such that the series of magnets 3 are situated in the rail at a height H1, this lying between the height H2 and H3, during operation. This has the result that the upward-directed attraction and/or repulsion between the series of magnets 3 and the further series of magnets 4 substantially cancel each other out as a result of the height difference. A further result is that, by selecting magnets 3 and 4 with a predetermined surface area, the difference between HI and H2, as well as the difference between HI and H3, can be compensated by the size of the magnet, such that attraction and/or repulsion is maintained, i.e. the distance between the surfaces of the magnets remains substantially constant, irrespective of the height difference. On the basis of figure 2 the skilled person will further appreciate that when the magnets of the series 3 and 4 are alternately oriented north-south, carriage 12 is locked relative to drive wheel 5a in the transport direction, this being the left-right direction in figure 2. This means that each rotation of drive wheel 5a will result in a corresponding movement of carriage 12. The corresponding movement of carriage 12 will here relate particularly to the horizontal movement component of the further series of magnets 4 in drive wheel 5.

Carriage 13 is shown in a state wherein the first magnet of the series of magnets 3 is magnetically coupled to a magnet of the further series of magnets 4 of drive wheel 5c, while a final magnet of the series of magnets 3 is magnetically coupled to a magnet of the further series of magnets of drive wheel 5d. Carriage 13 is thereby driven by two drive wheels 5c and 5d at the same time. In such a state drive wheel 5c will preferably move substantially synchronously with drive wheel 5d. Synchronous movement relates here on the one hand to the rotation speed of drive wheels 5c and 5d, but synchronous movement also relates to the relative position of drive wheels 5c and 5d. The skilled person will appreciate that both speed and orientation of the further series of magnets 4 of the two drive wheels 5c and 5d will have to be adjusted in order to attract and/or repel the series of magnets 3 of carriage 13 in uniform manner.

Figure 2 will provide the skilled person with the insight that the distance 9 between the first and the final magnet of the series of magnets 3 of the carriage must have a predetermined size relative to the radius 10 of drive wheels 5, further taking into consideration the clearance between adjacent drive wheels 5. This is because it must be possible to position the series of magnets 3 on the carriage relative to drive wheels 5 such that the series of magnets 3 is attracted and/or repelled by magnets 4 of adjacent drive wheels 5 at the same time. This is the state as shown in figure 2 by carriage 13. If the distance 9 is too small relative to radius 10, a simultaneous effect by two drive wheels 5 will be difficult or impossible, so that carriage 5 cannot be transferred, or only with great difficulty, from a drive wheel to a subsequent drive wheel 5.

Figures 1 and 2 clarify the preferred embodiment in which drive wheels 5 with substantially equal wheel width are placed mutually in line and wherein magnets are placed in opposite lateral surfaces of the drive wheels, at a periphery thereof. The distance between magnets of an upper segment of this drive wheel on the one hand and the magnets of carriage 2 on the other hand will be substantially constant during operation. The carriages can be deflected by rotation of the wheels.

The skilled person will appreciate on the basis of the above description that the invention can be embodied in different ways and on the basis of different principles. The invention is not limited to the above described embodiments. The above described embodiments and the figures are purely illustrative and serve only to increase understanding of the invention. The invention will not therefore be limited to the embodiments described herein, but is defined in the claims.

## Claims

1. Transport system comprising a rail and a carriage, wherein the carriage comprises a lower segment on which is placed a series of magnets which are positioned and oriented in accordance with a predetermined pattern, and wherein the carriage can be driven in a longitudinal direction of the rail by moving a complementary further series of magnets, which can be at least partially magnetically coupled to the series of magnets of the carriage, in the rail, and wherein the rail is constructed with a plurality of drive wheels lying mutually in line, wherein the drive wheels are each provided at the position of their periphery with the further series of magnets.

2. Transport system according to claim 1, wherein the drive wheels are positioned rotatably in the rail and wherein the drive wheels are configured to be driven in order to move the complementary series of magnets in the rail, wherein a part, situated in an upper circle segment of the drive wheels, of the further series of magnets can be magnetically coupled to the series of magnets of the carriages.

3. Transport system according to any of the foregoing claims, wherein the series of magnets of the carriages comprises at least three magnets placed on a line at substantially regular intermediate distances and such that the distance between the centre of gravity of the first and of the final magnet on the line is greater than the average radius of the drive wheels.

4. Transport system according to claim 3, wherein the at least three magnets comprise at least four magnets, preferably at least five magnets.

5. Transport system according to claim 3 or 4, wherein the series of magnets on the line are alternately oriented north and south.

6. Transport system according to any of the foregoing claims, wherein the plurality of drive wheels are configured to be driven individually.

7. Transport system according to any of the foregoing claims, wherein the transport system comprises a plurality of carriages, each having a lower segment on which said series of magnets is placed, and wherein the transport system comprises a controller for moving each of the carriages by controlling the plurality of drive wheels.

8. Transport system according to claim 7, wherein the controller is configured to drive the plurality of carriages at different speeds.

9. Transport system according to any of the foregoing claims, wherein the rail takes the form of a closed circuit so that the carriage can be driven endlessly over the circuit in a direction.

10. Transport system according to any of the foregoing claims, wherein the lower segment comprises two legs extending downward relative to a running surface in order to engage over lateral edges of the rail.

11. Transport system according to claim 10, wherein the series of magnets is provided in duplicate and placed in each of the two legs at a distance from the running surface, wherein the magnets are directed toward the rail.

12. Transport system according to claim 10, wherein the drive wheels are provided on either side, at the position of their periphery, with the further series of magnets, which are placed in lateral planes of the drive wheels.

13. Transport system according to any of the foregoing claims, wherein the carriage has an upper segment which is connected to the lower segment and which is configured to hold an object so that the object is movable over the rail.

14. Transport system according to any of the foregoing claims, wherein the rail and the carriage are provided with complementary guide elements so that the carriage is held fast on the rail by the guide elements during a movement in the longitudinal direction of the rail.
